# EUROPEAN PATENT SPECIFICATION

(11) **EP 0 898 493 B1**
(45) Date of publication and mention of the grant of the patent: **19.01.2000**
(21) Application number: 97908364.9
(22) Date of filing: 18.03.1997
(51) Int. Cl.: B01J 19/00, B03C 5/02

(54) **APPARATUS WITH ELECTRODE ARRAYS FOR CARRYING OUT CHEMICAL, PHYSICAL OR PHYSICO-CHEMICAL REACTIONS**
VORRICHTUNG MIT ELEKTRODENREIHEN ZUR DURCHFÜHRUNG VON CHEMISCHEN, PHYSIKALISCHEN ODER PHYSIKALISCH-CHEMISCHEN REAKTIONEN
APPAREIL A RESEAU D'ELECTRODES SERVANT A EFFECTUER DES REACTIONS CHIMIQUES, PHYSIQUES OU PHYSICO-CHIMIQUES

(30) Priority: 18.03.1996 GB 9605628
(43) Date of publication of application: 03.03.1999
(73) Proprietor: University Of Wales, Bangor, Bangor LL57 2DG (GB)
(72) Inventor: PETHIG, Ronald, Anglesey, Gwynedd LL59 5DT (GB); BURT, Julian, Paul, Hillhouse, Broad Lane, Rochdale OL16 4QQ (GB)
(74) Representative: Gallafent, Antony Xavier
(86) International application number: GB9700753
(87) International publication number: WO9734689

(56) References cited:
- EP-A- 0 645 169
- WO-A-92/07657
- WO-A-93/16383
- DE-A- 4 127 405
- DE-A- 4 400 955
- NEW SCIENTIST, vol. 153, no. 2071, 1 March 1997, LONDON GB, pages 22-26, XP002034150 M.WARD: "Devilish tricks with tiny chips" cited in the application
- LASER FOCUS WORLD, vol. 33, no. 1, January 1997, TULSA US, pages 19-20, XP000677689 B.R.MARX: "Micromachined chip may identify micro-organisms fast" cited in the application

## Description

This invention relates to apparatus for carrying out reactions and/or manipulation of a chemical, physical or physico-chemical nature.

Since the middle ages, and indeed earlier, scientific experiment and subsequent science-based manufacture has been based on the concept of effecting reactions between different materials with a view to obtaining a desired reaction product. Originally, the nature of the reaction in question was poorly understood, but the twentieth century has witnessed an enormous increase in understanding of reactions and their detailed mechanism. Scientific understanding now includes large areas of detail as to how reactions proceed on a microscopic scale, which has in turn led to the development of improved macroscopic reaction equipment and apparatus.

In contrast, little attention appears to have been paid to conducting reactions for the purpose of producing useful products on a microscopic scale, though much investigative work as to how reactions proceed at such scales has been effected. The underlying concept behind the present invention is to produce apparatus adapted to operate and effect reactions on a microscopic scale, particularly with a view to being able to carry out precisely tailored reaction sequences, perhaps involving many steps, to provide useful products and to do so without the production of byproducts or the necessity of extensive separation steps, e.g. to recover very small quantities of desired product from a much larger quantity of reaction mixture.

DE-OS-4127405 discloses a method of separating mixtures of microscopic dielectric particles in suspension in a liquid which involves moving the particles in the liquid by the application of dielectrophoresis combined with bulk liquid medium movement. The liquid is caused to flow over a silicon wafer surface along guide channels and electrodes are provided which are subjected to electrical signals to produce one desired dielectrophoretic effect. There is no disclosure in this specification of any use of dielectrophoresis to promote reactions, only to achieve separation.

The problem underlying the present invention is to design improved reaction apparatus dedicated to carrying out a precise sequence of reaction steps in a controlled fashion to produce desired products.

According generally to the present invention there is provided apparatus for carrying out chemical, physical or physico-chemical reactions between particles suspended in a liquid medium which comprises a generally planar substrate, means defining on the substrate a plurality of interconnected fluid channels, and a plurality of electrode arrays associated with the channels and/or with junctions between the channels, and means for applying electrical signals to the electrode arrays to cause movement of particles suspended in liquid within the channels by one or more electromotive phenomena, characterised in that the apparatus includes at least one junction comprising a pair of partially overlapping electrode arrays and in that the means for applying electrical signals is adapted to apply different signals to each of the pair of partially overlapping electrode arrays to produce different travelling wave dielectrophoretic movement of the suspended particles.

The term particles used above is to be construed broadly. It covers, in particular, composite particles consisting of a solid or liquid base having attached thereto one or more than one type of reactive entity, for example a so-called biomolecule. The base may be of simple construction, such as a particle of a pure substance, or it may be of a composite nature, for example a biological cell or a particle of a gel.

The exact construction of the interconnected fluid channels on the substrate may vary widely depending on the area of application. They are generally in the form of a planar array, though it is conceivable (though more difficult to fabricate) that three-dimensional or layered arrays may be made. In all cases, however, the channels need to be accurately fabricated on the substrate and of appropriate dimensions. Two known techniques for fabricating channels may be used, separately or in combination, viz. photolithography and laser machining. Such techniques are also useful in the production of electrode arrays associated with the fluid channels. The fluid channels may be partly or completely enclosed by the addition of a cover so as to confine particles to within such channels.

The idea of using such techniques for making fluid fillable channels is not new. Washizu in a paper entitled "Electrostatic manipulation of biological objects", Journal of Electrostatics, 25 (1990), 109-123 describes the manufacture and use of a device which he calls a "fluid integrated circuit" to move individual biological cells in desired fashion, in which the channels are just wider than a single cell. In the apparatus of the present invention, the channels may be wider, so as to permit controlled manipulation of many particles at the same time.

Apparatus of the present invention may, however, be visualised as a sort of integrated fluid circuit on a substrate associated with electrode arrays to move particles within the fluid as desired. In further analogy to the well-known field of integrated circuit manufacture, many of the types of apparatus within the scope of the present invention may be thought of as made up of a set of modules or components, each designed to do a particular task such as concentrating particles together, separating one type of particle from another, trapping particles of a particular type and subjecting particles to bulk movement. It should be noted that the fluid in the channels may be moving or stationary.

The electromotive phenomena used to move the particles may be selected from a variety of electrokinetic effects. Of particular value are dielectrophoresis (DEP), electrorotation (ROT) and travelling wave dielectrophoresis (TWD). These phenomena are well known and documented in the scientific literature, and have been extensively studied. The literature on these subjects discloses a number of experimental techniques which may be adapted in the design and construction of apparatus according to the present invention. For example, the fabrication of planar microelectrodes to study DEP is well known and used as standard practice in laboratory research into DEP. Such literature also discloses the use of optical techniques for measuring DEP and ROT properties of colloidal particles and the development of multilayer electrode assemblies for electrokinetic studies.

The patent literature also discloses a variety of techniques which may be used in apparatus of the present invention. Thus WO91/11262 discloses using DEP to manipulate solid, semi-solid and liquid materials, WO93/16383 the use of electrorotation analysis and the use of TWD to move particles is disclosed in W094/22583. Various of the techniques disclosed in these patent specifications can be adapted for use in part of the apparatus of the invention.

The apparatus of the invention can be used in a myriad of different reaction areas. Of particular importance, however, is its use in performing a wide range of bioprocessing functions. These may include both laboratory type functions or manufacturing type ones, for example testing for the presence of minute quantities of contaminants or pollutants in water, screening pharmaceutical compounds and manufacturing "designer biomolecules". Descriptions of this technology and its applications have been given by Bridget R Marx in an article entitled "Micromachined Chip may identify Microorganisms fast" in the January 1997 issue of Laser Focus World, pages 19 and 20, as well as by Mark Ward in an article entitled "Devilish Tricks with Tiny Chips" in the 1st March 1997 issue of the "New Scientist", pages 22 to 26.

The invention is illustrated, by way of example only, with reference to a simple apparatus designed to detect specific microorganisms in water. This is explained with reference to the accompanying drawings, in which:
Figure 1 is a schematic diagram of a simple form of apparatus according to the present invention;
Figure 2 is a diagram of a TWD conveyor used in the apparatus of Figure 1;
Figure 3 is a diagram of a non-selective trap used in the apparatus of Figure 1;
Figure 4 is a diagram of a selective trap used in the apparatus of Figure 1;
Figure 5 is a diagram of a sorting junction used in the apparatus of Figure 1; and
Figure 6 is a diagram of an electrorotational analysis chamber used in the apparatus of Figure 1;

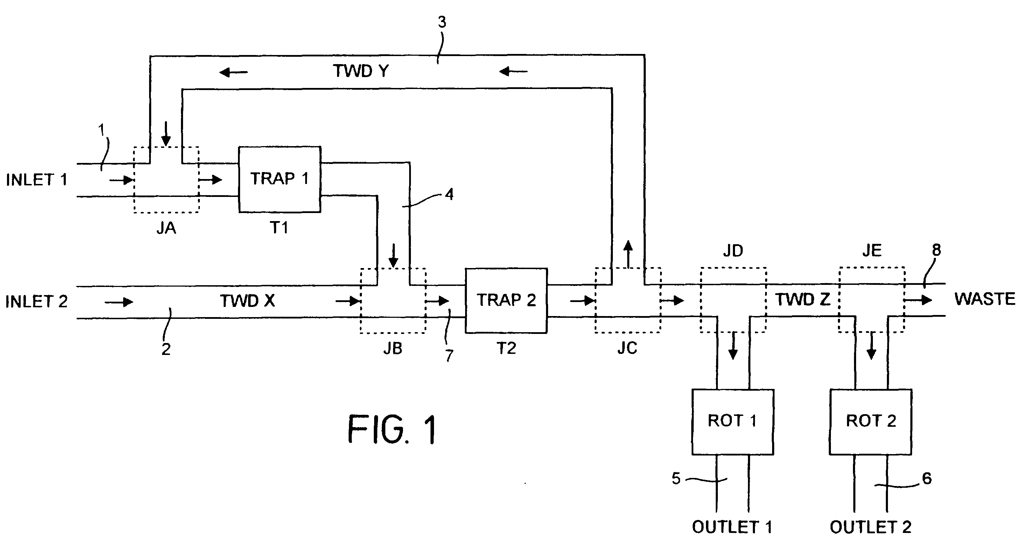

Referring first to Figure 1, this shows a block diagram of apparatus according to the invention for detecting certain microorganisms in water. Raw water supplies contain a range of microorganisms the majority of which are harmless. However, two microorganisms of particular interest are the parasites *Cryptosporidium parvum* and *Giardia lamblia.* The device shown in figure 1 is designed to detect these two microorganisms and consists of a number of interconnected channels 1 to 8 formed on a substrate. Some of the channels include particle traps T1, T2, and the outlet channels include electrorotation chambers ROT1 and ROT2. Junctions between the channels are denoted JA, JB, JC, JD and JE. Associated with all of the channels are arrangements of electrodes (not illustrated in Figure 1) to move (when appropriate electrical signals are fed to the electrode arrays) particles in the channels along them by TWD.

The apparatus operates as follows:

A water sample, having been passed through a simple filter to remove large debris, is fed into inlet channel 1. Here particulate matter in the sample would experience a travelling electric field (TWD) to convey the particles into Trap T1, where they are dielectrophoretically trapped onto a set of castellated microelectrodes. Meanwhile, a sample of latex beads, coated in an antibody targeted to a specific microorganism, is fed into inlet 2. These beads also experience a travelling electric field along conveyor track X into Trap T2. Trap T2 is of a selective nature and, at this time, configured to trap the latex beads. Having trapped the beads, the particles stored in Trap T1 are released and moved through Junction JB and into Trap T2. Here an appropriate electric field is applied to the electrodes to attract both latex beads and microorganisms to the immobilising electrodes. This trapping action rapidly promotes the reaction between the desired microorganism and the antibody coated beads. Non-microorganism particles experience a travelling field which will move them out of Trap T2 and along conveyor track Z to a waste outlet 8. The sample now comprises a mixture of bead-organism complexes and unreacted organisms and beads. On releasing all the trapped particles (reacted and non-reacted) from Trap T2 the particles travel towards Junction JC, where particles which are not beads or bead-complexes are drawn along conveyor track Y and, via junction JA, trapped at Trap T1. The remaining particles continue to travel towards Junction JD where bead/organism complexes are directed towards the rotation chamber ROT 1. Any particles left (unreacted beads) are directed towards the waste outlet. The bead/organism complexes, now in chamber ROT 1, can be studied using electrorotation. By the appropriate application of electric fields and rotation detection using image processing it is a simple matter to enumerate the number of organisms present as well as calculate their viability. Having analysed the first microorganism, the process can be repeated with a second batch of latex beads being trapped at Trap T2, this time targeted at a different organism. In this case the targeted organism would be directed towards chamber ROT 2 to allow comparisons etc to be made.

The example given above is merely illustrative of the sort of apparatus that can be constructed in accordance with the present invention, and of the type of reaction and manipulation sequence achievable. As can be readily appreciated, however, this can only be achieved by the use of several types of building block, and some of these are described, by way of illustration, with respect to the remaining figures of the drawings.

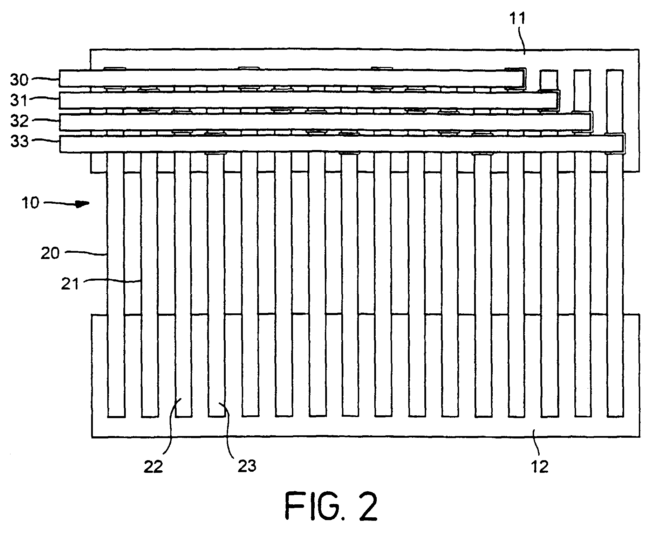

Figure 2 shows schematically a TWD conveyor track. A channel 10 is located between two insulating "banks" 11, 12, each of which is of a suitable height to define the depth of the liquid channel.

Running across the channel are a plurality of transverse electrodes 20,21,22, etc and alongside the channel, on top of one of the insulating banks, is a set of four conductive strips 30,31,32 and 33. The bank has perforations where shown enabling electrical contact between each of strips 30, 31, etc and each fourth transverse electrode of the electrodes 20, 21, 22, etc.

In using the apparatus of the present invention, particles in a liquid in channel 10 may be caused to move along the channel by applying quadrature sinusoidal voltages, i.e. at phase angles of 0°, 90°, 180° and 270° to conductive strips 30 to 33. This produces a travelling electric field along channel 10, and by suitable choice of amplitude and frequency of the applied signals, the speed of motion of particles in the liquid in the channel, and their direction of motion, can both be controlled. Accordingly, subunits of this type can be used to move particles from one part of the apparatus of the present invention to another, as desired. A practical realisation of the TWD conveyor track depicted in Figure 2 has been described by J P H Burt, R Pethig, M S Talary and J A Tame, in 1995 in an article entitled "Travelling-Field Electro-Manipulation of Bioparticles", published in the volume International Progress in Precision Engineering (Edited by M Bonis, Y Alayli, P Revel, P A McKeown and J Corbett) Elsevier Press, pages 476 to 479. The test particles used to demonstrate the controlled travelling field induced motion were latex spheres of diameter 6 microns, and the stationary liquid suspending medium was an ionic aqueous solution.

It should be observed that the use of four conductive strips is illustrative rather than required; alternative electrode/conductive strip arrangements may be used which, fed with appropriate signals, will produce a TWD effect.

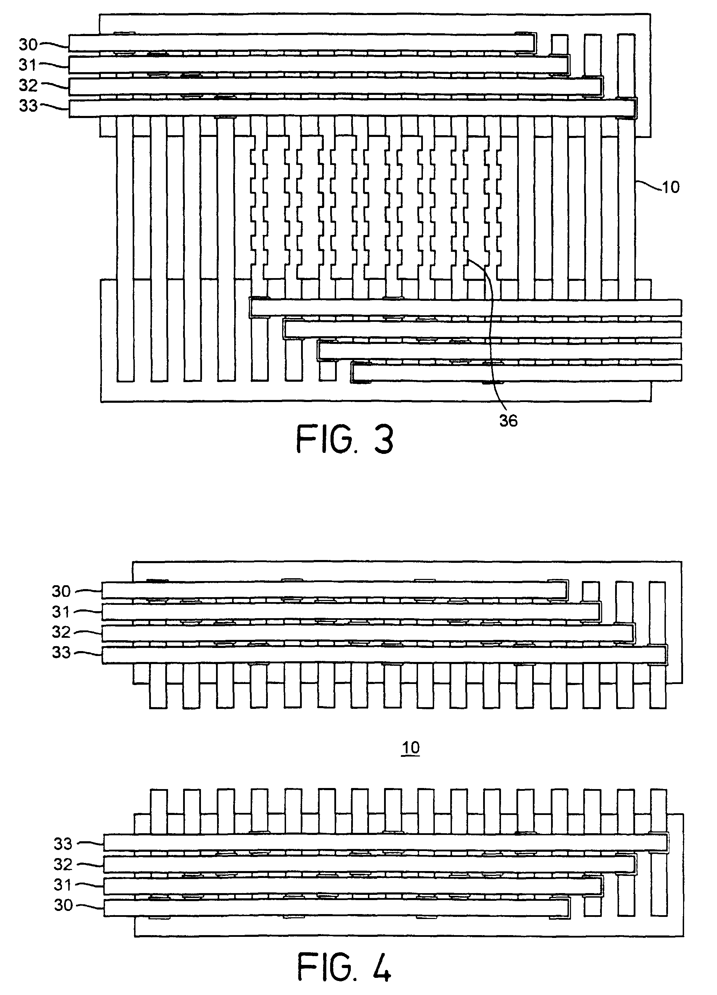

Figures 3 and 4 show a different type of subunit, viz a trap. Two types of trap are shown, a non-selective trap in Figure 3 and a selective one in Figure 4. Each trap consists of a channel 10 with transverse electrodes and signal supply strips running alongside the channel and connected to the transverse electrodes at perforations in the insulating "bank" as shown.

The non-selective trap of figure 3 functions in a manner similar to that of the conveyor track shown in figure 2. However, part of the track is crossed by castellated, interdigitated electrodes 36. These can simply function as the transverse electrodes in Figure 2, but if it is desired to trap particles, the applied voltage to these specific electrodes is changed which leads to a strongly non-uniform electric field which can cause the particles to be attracted to, and immobilised at, the castellations. Practical demonstrations of the trapping of biological particles, using castellated, interdigitated, electrodes of the form shown in Figure 2 have been described in the publication entitled "Positive and negative dielectrophoretic collection of colloidal particles using interdigitated castellated microelectrodes", in 1992 by R Pethig, Y Huang, X-B Wang and J P H Burt in Journal of Physics D: Applied Physics, volume 25, pages 881 to 888. If it is desired to release the particles, then the signals applied to the electrodes revert to the TWD type, and the particles are moved along the channel 10 accordingly.

Figure 4 shows the selective trap. A TWD electric field is continuously applied to the transverse electrodes on both sides of the channel 10, but with its frequency carefully selected to affect different particles suspended in liquid in channel 10 differently. Thus, if two particle types are present and they have different dielectric properties, the frequency may be chosen, for example, to subject one particle type to negative dielectrophoretic force to move it along in the centre of channel 10, while causing the other particle type to experience a positive dielectrophoretic force attracting them to the tips of the transverse electrodes where they are held while the signals continue to be applied.

A practical realisation of the TWD selective trap depicted in Figure 4 has been described by M S Talary, J P H Burt, J A Tame and R Pethig in 1996 in a paper entitled "Electro Manipulation and Separation of Cells using Travelling Electric Fields" in the Journal of Physics D: Applied Physics, volume 29, pages 2198 to 2203. Yeast cells of *Saccharomyces cerevisiae* were grown at 30°C in a medium of pH 5 containing 5% sucrose, 0.5% yeast extract and 0.5% bacterial peptone. The cells were harvested after 24 hours in the exponential growth phase of the culture and washed and re-suspended three times in 280 mM mannitol. Cell suspensions in 280 mM mannitol were adjusted to conductivities of 8 µS cm⁻¹ and 78 µS cm⁻¹ by the addition of NaCl as determined by an HP 4192A impedance analyser at 100 kHz, using platinum black electrodes to minimise electrode polarisation effects. Non-viable cell suspensions were prepared by autoclaving a harvested yeast sample at 75°C for ten minutes, followed by washing and re-suspending the sample three times in 280 mM mannitol. The uptake of methylene blue stain was used to confirm that the yeast had been rendered non-viable. Mixed cell suspensions of viable and non-viable yeast were prepared for two suspending medium conductivities of 8 µS cm⁻¹ and 78 µS cm⁻¹. On energising the four conductive strips 30, 31, 32 and 33 with quadrature 4 V pk-pk signals of frequency 35 kHz, and with the cells suspended in 280 mM mannitol of conductivity 78 µS cm⁻¹, the non-viable cells were directed towards and immobilised at the electrode tips by positive dielectrophoresis, thereby removing them from the channel. The viable cells, on the other hand, were directed towards the middle of the channel under the influence of negative dielectrophoresis and migrated along the channel at a rate of about 25 µm sec⁻¹ in the direction opposing that of the travelling electric field. For the case of a mixture of viable and non-viable yeast cells suspended in 280 mM mannitol of conductivity 8 µS cm⁻¹, on exciting the electrodes with 5 V pk-pk quadrature signals of frequency 4 MHz, the viable yeast cells were rapidly immobilised at the electrode tips by positive dielectrophoresis, whilst the non-viable cells were directed towards the middle of the channel by negative dielectrophoresis, and then travelled at a rate of around 30 µm sec⁻¹ along the channel in the same direction as that of the travelling field.

In another publication, in press at the time of this writing, J P H Burt, R Pethig and M S Talary describe in a paper entitled "Microelectrode devices for manipulating and analysing bioparticles" in the Transactions of the Institute of Measurement and Control, how this basic procedure can be employed to separate red blood cells from white blood cells in a suspended mixture of such cells.

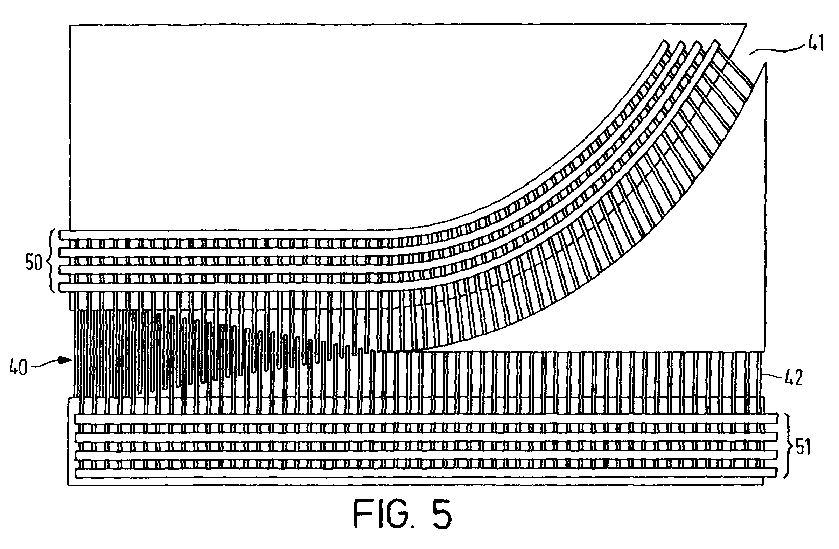

Figure 5 shows a directional junction unit which can be used to separate subpopulations of particles of different types from a mixture thereof, or, in reverse, to mix two types together if desired. Again, particles are made to move along the channels here denoted 40, 41, 42 by applying signals to transverse electrodes via supply leads indicated generally at 50, 51. At the channel part 40, two independent travelling wave fields may be applied to the particles in the liquid. The signals applied at 50 are chosen so that most of the particles are moved along towards channel 41, but the signal applied at 51 is so chosen that a desired sub-population of the particles in the liquid moves better under its influence. The differing particle types are attracted, as they move along the channel 40, to move towards channel 41 or 42, and at the junction of channels 40, 41 and 42 each side of the channel is subjected to a different travelling field which causes the particles to go down the appropriate channel 41 or 42. This separation is preferably enhanced by the application of superimposed fields providing a weak dielectrophoretic force on the particles, to assist in inducing them to go to the desired side of the channel.

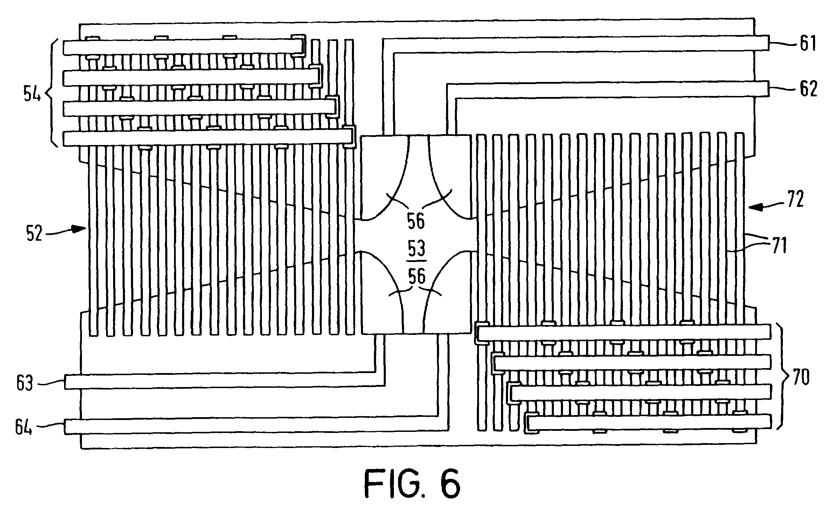

Figure 6 shows schematically a rotation analysis chamber for monitoring the properties of particles suspended in a liquid medium, e.g. concentration, viability. A set of transverse electrodes along a channel 52 may be caused to move particles suspended in liquid in channel 52 towards a central chamber 53 by applying suitable signals to a set of leads 54, connected as described above to the transverse electrodes. Chamber 51 is bounded by four shaped electrodes 56 arranged as shown. By applying a sinusoidal voltage signal in quadrature to four leads 61, 62, 63 and 64 which are connected to electrodes 56, a rotating electrical field may be applied to the chamber 53. As the particles therein interact with the rotating electric field, they experience torque, the magnitude and polarity of which corresponds to the precise nature of the particles. The walls of chamber 53 are transparent so that the behaviour of particles therein can be observed on a microscopic scale. Such observation may be by eye, but it is much preferred that the apparatus of the present invention is used in conjunction with automatic optical scanning apparatus to determine the properties of the particles in chamber 53. An example of how a rotation analysis chamber of the form of Figure 6 can be used for a so-called Electrorotation Assay (ERA), Patent Application W093/16382, is provided by J P H Burt, K L Chan, D Dawson, A Parton and R Pethig in their article "Assays for Microbial Contamination and DNA Analysis based on Electrorotation" published in the journal Annales Biologie Clinique, volume 54, pages 253 to 257, 1996. Here it is described how the ERA technique uses the phenomenon of electrorotation in combination with antibody technology to enable the rapid and accurate detection of analytes in aqueous solutions. In the assay, an analyte is bound to a well characterised bead, causing a change in the dielectric properties of the analyte-bead complex over the properties of just the bead. This change in dielectric property is subsequently detected using the electrorotation technique. Selectivity can be controlled by the choice of binding agents used on the known particle and, as such, this assay method can be used with different analytes ranging from whole cells to molecular species. For the detection of *Cryptosporidium* and *Giardia* 0.8µm diameter latex beads are used, which enhances the difference between the rotation characteristics of viable and non-viable species.

The overall ERA detection system consists of several stages. The first stage is the sample preparation. Usually, a sample will consist of between 10 and 100 litres of raw water depending on the amount of sediment present, which is concentrated to a volume of approximately 250 ml. In the sample preparation stage, the water is first passed through a simple filter to remove large sedimentary particles (>30µm) and then through an affinity separation stage which concentrates just the *Cryptosporidium* or *Giardia* into a final sample of around 1 ml. During this affinity separation stage, the assay complex is formed and also serves to modify the dielectric properties of the *Cryptosporidium* or *Giardia.* After complexing with the parasites, the latex beads exhibit a large anti-field electrorotation effect instead of the co-field rotation observed for the uncoated beads. This effect arises from the low conductivity of the outer structure of the *Cryptosporidium* and serves as an important indicator of bead-complex formation. Observing the anti-field rotation at 100kHz confirms that either live or dead parasites have been complexed to the beads, and subsequent analysis at 250kHz will provide an assay of the viable organisms (from the number of bead-complexes exhibiting large anti-field rotation) and of the non-viable ones which will exhibit either very slow anti-field rotation or no rotation at all. The most distinctive result occurs using a rotating field generated at around 1MHz, because the non-viable organism-bead complexes exhibit co-field rotation, whilst the viable complexes exhibit anti-field rotation.

Once those properties have been determined, signals may be applied to a set of leads 70 connected to transverse electrodes 71 across an outlet channel 72 to attract the particles out of chamber 53 and transport them away.

It will be appreciated that in use of the apparatus of the present invention, a set of appropriate signals must be applied to a plurality of sets of electrodes on the apparatus in appropriate time sequence if the desired results are to be obtained. These may be pre-programmed if desired in some cases, while in others part of the sequence can be pre-programmed and the remainder generated under programmed control, e.g. using microprocessor-based control techniques known per se.

## Claims

1. Apparatus for carrying out chemical, physical or physico-chemical reactions between particles suspended in a liquid medium, which apparatus comprises a generally planar substrate, means defining on the substrate a plurality of inter-connected fluid channels, and a plurality of electrode arrays associated with the channels and/or with junctions between the channels, and means for applying electrical signals to the electrode arrays to cause movement of particles suspended in liquid within the channels by one or more electromotive phenomena, characterised in that the apparatus includes at least one junction comprising a pair of partially overlapping electrode arrays and in that the means for applying electrical signals is adapted to apply different signals to each of the pair of partially overlapping electrode arrays to produce different travelling wave dielectrophoretic movement of the suspended particles.

2. Apparatus according to Claim 1 wherein the inter-connected fluid channels constitute a single planar array.

3. Apparatus according to Claim 1 or 2 wherein the channels are made by photo lithography and/or laser machining.

4. Apparatus according to any one of Claim 1 to 3 wherein the width of the channels is at least twice the average particle size of the particles to be reacted.

5. Apparatus according to any one of Claim 1 to 4 wherein the electrode arrays and means for applying electrical signals to them are adapted to move particles by dielectrophoresis and/or electro-rotation and/or travelling wave dielectrophoresis.

6. Apparatus according to any one of the preceding Claims wherein at least some of the electrode arrays are arranged when appropriate electrical signals are applied thereto to act as particle traps from which particles may be subsequently released by applying different electrical signals thereto.

7. Apparatus according to any one of the preceding Claims wherein at least one of the electrode arrays is adapted to constitute with its associated fluid channels an electro-rotation analysis chamber.

8. Apparatus according to any one of the preceding Claims and including an inlet channel and two outlet channels and wherein the electrode arrays associated with the inlet and both outlet channels and the means for applying electrical signals to the electrode arrays are adapted to sort particles of different properties entering from the inlet channel into the two outlet channels.

## Patentansprüche

1. Vorrichtung zur Durchführung von chemischen, physikalischen oder physikochemischen Reaktionen zwischen Teilchen, die in einem flüssigen Medium suspendiert sind, wobei die Vorrichtung ein im allgemeinen ebenes Substrat, Mittel zur Festlegung einer Mehrzahl von untereinander verbundenen Fluidkanälen auf dem Substrat, eine Mehrzahl von Elektrodenanordnungen, die den Kanälen und/oder Verbindungen zwischen den Kanälen zugeordnet sind, und Mittel zum Übertragen von elektrischen Signalen auf die Elektrodenanordnungen, um eine Bewegung von in einer Flüssigkeit innerhalb der Kanäle suspendierten Teilchen durch ein oder mehrere elektromotorische Phänomene zu verursachen, dadurch gekennzeichnet, daß die Vorrichtung mindestens eine Verbindung enthält, die ein Paar teilweise sich überlappender Elektrodenanordnungen aufweist sowie die Mittel zum Übertragen von elektrischen Signalen dafür eingerichtet sind, auf jede der als Paar vorliegende, teilweise sich überlappende Elektrodenanordnung verschiedene Signale zu übertragen, um eine dielektrophoretische Bewegung der suspendierten Teilchen mit unterschiedlichen Wanderwellen zu erzeugen.

2. Vorrichtung nach Anspruch 1, worin die untereinander verbundenen Fluidkanäle eine einzige ebene Anordnung bilden.

3. Vorrichtung nach Anspruch 1 oder 2, worin die Kanäle durch Fotolithografie und/oder mittels Laser maschinell hergestellt sind.

4. Vorrichtung nach einem der Ansprüche 1 bis 3, worin die Breite der Kanäle mindestens das Zweifache der durchschnittlichen Korngröße der umzusetzenden Teilchen beträgt.

5. Vorrichtung nach einem der Ansprüche 1 bis 4, worin die Elektrodenanordnungen und die Mittel zum Übertragen von elektrischen Signalen auf die Anordnungen dafür eingerichtet sind, Teilchen durch Dielektrophorese und/oder Elektrorotation und/oder Dielektrophorese mit Wanderwelle zu bewegen.

6. Vorrichtung nach einem der vorstehenden Ansprüche, worin mindestens einige der Elektrodenanordnungen dazu eingerichtet sind, daß sie dann, wenn auf sie geeignete elektrische Signale übertragen werden, als Teilchenfallen wirken, aus denen nachfolgend durch Übertragen von verschiedenen elektrischen Signalen auf die Elektrodenanordnungen Teilchen freigesetzt werden können.

7. Vorrichtung nach einem der vorstehenden Ansprüche, worin mindestens eine der Elektrodenanordnungen dafür eingerichtet ist, mit ihren zugeordneten Fluidkanälen eine Elektrorotationsanalysekammer zu bilden.

8. Vorrichtung nach einem der vorstehenden Ansprüche, mit einem Einlaßkanal und zwei Auslaßkanälen, wobei die dem Einlaßkanal und den beiden Auslaßkanälen zugeordneten Elektrodenanordnungen sowie die Mittel zum Übertragen von elektrischen Signalen auf die Elektrodenanordnungen darauf eingerichtet sind, in den Einlaßkanal eintretende Teilchen mit verschiedenen Eigenschaften in die zwei Auslaßkanäle zu sortieren.

## Revendications

1. Dispositif destiné à effectuer des réactions chimiques, physiques ou physico-chimiques entre des particules en suspension dans un milieu liquide, lequel dispositif comprend un substrat sensiblement plan, un moyen définissant sur le substrat un certain nombre de canaux pour fluide interconnectés, et un certain nombre de groupements d'électrodes associés aux canaux et/ou aux jonctions entre les canaux, et un moyen destiné à appliquer des signaux électriques aux groupements d'électrodes afin de provoquer un déplacement des particules en suspension dans le liquide à l'intérieur des canaux grâce à un ou plusieurs phénomènes électromoteurs, caractérisé en ce que le dispositif comprend au moins une jonction comprenant une paire de groupements d'électrodes se chevauchant en partie et en ce que le moyen destiné à appliquer des signaux électriques est conçu pour appliquer des signaux différents à chaque groupement de la paire des groupements d'électrodes se chevauchant en partie afin de produire divers déplacements diélectrophorétiques par ondes progressives des particules en suspension.

2. Dispositif selon la revendication 1, dans lequel les canaux pour fluide interconnectés constituent un seul groupement plan.

3. Dispositif selon la revendication 1 ou 2, dans lequel les canaux sont réalisés par photolithographie et/ou usinage au laser.

4. Dispositif selon l'une quelconque des revendications 1 à 3, dans lequel la largeur des canaux est d'au moins deux fois la dimension moyenne de particule des particules devant être mises à réagir.

5. Dispositif selon l'une quelconque des revendications 1 à 4, dans lequel les groupements d'électrodes et le moyen destiné à appliquer des signaux électriques à ceux-ci sont conçus pour déplacer des particules par diélectrophorèse et/ou électro-rotation et/ou diélectrophorèse par ondes progressives.

6. Dispositif selon l'une quelconque des revendications précédentes, dans lequel au moins certains des groupements d'électrodes sont agencés, lorsque des signaux électriques appropriés sont appliqués à ceux-ci, afin d'agir en tant que pièges de particules depuis lesquels les particules peuvent être ensuite libérées en appliquant des signaux électriques différents à ceux-ci.

7. Dispositif selon l'une quelconque des revendications précédentes, dans lequel au moins l'un des groupements d'électrodes est conçu pour constituer avec ses canaux pour fluide associés une chambre d'analyse par électro-rotation.

8. Dispositif selon l'une quelconque des revendications précédentes, et comprenant un canal d'entrée et deux canaux de sortie, et dans lequel les groupements d'électrodes associés au canal d'entrée et aux deux canaux de sortie ainsi que le moyen destiné à appliquer des signaux électriques aux groupements d'électrodes sont conçus pour trier des particules de propriétés différentes pénétrant depuis le canal d'entrée dans les deux canaux de sortie.
